# EUROPEAN PATENT APPLICATION

(11) **EP 3 767 491 A1**
(43) Date of publication of application: **20.01.2021**
(21) Application number: 20185690.3
(22) Date of filing: 14.07.2020
(51) Int. Cl.: G06F 16/951

(54) **SEARCH-QUERY REDIRECTION**

(30) Priority: 15.07.2019 FR 1907947; 15.07.2019 US 201916511055
(71) Applicant: Amadeus S.A.S., 06410 Biot (FR)
(72) Inventor: GALOPO, Michael Dominique Raymond, 06410 Biot (FR); BIGOURDAN, Tristan, 06410 Biot (FR)
(74) Representative: Samson & Partner Patentanwälte mbB

(57) **Abstract**

The subject disclosure relates to methods, servers, and computer program product for processing search queries in a distributed database system. For example, a method for processing search queries in the distributed database system is provided. The method includes receiving, at a meta-search server, a first search query from a client; retrieving, from a plurality of service providing servers, search results matching the first search query; storing the search results associated with corresponding unique identifiers in a search result database; and returning, by the meta-search server, the search results to the client. The method further comprises generating, by the meta search server in response to receiving a second search query from the client indicating at least one selected search result of the search results, a redirection link identifying the service providing server from which the at least one selected search result was retrieved and including the unique identifier corresponding to the at least one selected search result; and redirecting, by the meta-search server using the redirection link, the client to the service providing server identified in the redirection link to retrieve, from the search result database, the at least one stored search result using the unique identifier included in the redirection link for processing the second search query.

## Description

The subject disclosure generally relates to computers and computer software and more specifically, to methods, servers, and computer program products that process search queries.

Recent developments in database technology show that it is a technical problem to ensure short response times to search queries which require processing large volumes of data. Also, these recent developments provide so-called meta-search engines and allow searches in multiple search engines by a single search query. Results, matching search criteria in the search query, from the multiple search engines are provided to the client by the meta-search engine. The client can select search results from among these results and is then redirected by the meta-search engine to the search-enabled website of the provider which provided the search result. When redirecting the client to the website, a Uniform Resource Locator (URL) is generated and used by the meta-search engine. The URL contains, among other information, the search criteria of the search query. The search engine uses the information in the URL to further process the selected search results and provide the results of the further processing to the client.

Several approaches have been proposed for efficiently redirecting the client. For example, in US 2005/119921 A1, a method of processing a reservation transaction between a customer and reservation-booking entity via a computer network interconnecting a customer computer with an automated reservation transaction processor is provided, which uses deep-linking techniques. Similarly, in US 2016/267400 A1 which provides a method for receiving a selection of travel product, providing access to booking and/or booking one or more travel products, deep-linking is used to provide direct access to allow a user to book the indicated one or more travel products.

According to a first aspect of the present disclosure, a method for processing search queries is provided. The method comprises: receiving, at a meta-search server, a first search query from a client; retrieving, from a plurality of service providing servers, search results matching the first search query; storing the search results associated with corresponding unique identifiers in a search result database; and returning, by the meta-search server, the search results to the client. The method further comprises, in response to receiving a second search query from the client indicating at least one selected search result of the search results, generating, by the meta-search server, a redirection link identifying the service providing server from which the at least one selected search result was retrieved and including the unique identifier corresponding to the at least one selected search result. Furthermore, the method comprises redirecting, by the meta-search server using the redirection link, the client to the service providing server identified in the redirection link to retrieve, from the search result database, the at least one stored search result using the unique identifier included in the redirection link for processing the second search query.

According to an example, the method further comprises, at each of the plurality of service providing servers, assigning the search results each with a unique identifier and transmitting the search results associated with the corresponding unique identifiers to the meta-search server. In this example, storing the search results in the search result database is performed by each of the plurality of service providing servers, or by the meta-search server. Alternatively or additionally, according to another example, the method comprises, at the meta-search server, assigning the retrieved search results each with a unique identifier. In this example, the storing in the search result database is performed by the meta-search server.

In another example, the unique identifier comprises a first portion indicating the service providing server from which the respective search result was retrieved and a second portion identifying the respective search result in the search result database.

In yet another example, the redirection link is a deep link comprising the unique identifier of the at least one selected search result. The deep link is used by the respective service providing servers to retrieve the at least one stored search result corresponding to the at least one selected search result from the search result database.

According to a further example, the redirecting further includes encrypting the unique identifier using an encryption scheme, and generating the deep link being the redirection link so as to include the encrypted unique identifier.

According to other examples, one or more of the meta-search server, the service providing servers and the search result database operate according to New Distribution Capability (NDC) standard.

In some examples, a format of at least one of the search results is based on Extensible Markup Language (XML) and/or NDC data transmission standard format. Also, in some examples, the first search query may be a request for providing offers of a shopping provider, which may be based on the NDC standard (e.g., NDC Shopping request) or on an Application Programming Interface (API) (e.g., an API to request offers, the API may be specific to the shopping provider). In some examples, the second search query may be a request to get detailed information about a specific offer (e.g., a price breakdown) based on the NDC standard (e.g., NDC OfferPrice) or a request for placing an offer in a shopping cart based on an API (e.g., an API to add an offer to a shopping cart). In other examples, the second search query may be a request for purchasing an offer, either based on the NDC standard (e.g., an NDC OrderCreate request) or based on an API (e.g., an API to purchase an offer, an API to checkout and order an offer in the cart).

According to a second aspect of the subject disclosure, a meta-search server to process search queries is provided. The meta-search server may be part of a distributed database system also comprising a plurality of service providing servers each comprising a database, and a search result database. The meta-search server is arranged to: receive a first search query from a client; retrieve, from the plurality of service providing servers, search results matching the first search query, the search results retrieved from the plurality of service providing servers being stored associated with corresponding unique identifiers in the search result database; and return the search results to the client. The meta-search server is further arranged to: receive a second search query from the client indicating at least one selected search result of the search results; upon receipt of the second search query, generate a redirection link identifying the service providing server from which the at least one selected search result was retrieved and including the unique identifier corresponding to the at least one selected search result; and redirect, using the redirection link, the client to the service providing server identified in the redirection link to retrieve, from the search result database, the at least one stored search result using the unique identifier included in the redirection link for processing the second search query.

According to an example, the search results are assigned each with a unique identifier at the plurality of service providing servers and the search results associated with the corresponding unique identifiers are transmitted to the meta-search server. In this example, the meta-search server may be arranged to store the search results in the search result database. Alternatively or additionally, according to another example, the meta-search server is arranged to assign the retrieved search results each with a unique identifier. In this example, the meta-search server is arranged to store the search results in the search result database.

In another example, the unique identifier comprises a first portion indicating the service providing server from which the respective search result was retrieved and a second portion identifying the respective search result in the search result database.

In yet another example, the redirection link is a deep link comprising the unique identifier of the at least one selected search result. The deep link is used by the respective service providing servers to retrieve the at least one stored search result corresponding to the at least one selected search result from the search result database.

According to a further example, the meta-search server is arranged to encrypt the unique identifier using an encryption scheme, and generate the deep link being the redirection link so as to include the encrypted unique identifier.

According to a third aspect of the subject disclosure, a computer program product is provided. The computer program product comprises instructions which, when executed by a computer, cause the computer to perform the method according to the first aspect and the examples thereof.

The above summary presents a simplified summary in order to provide a basic understanding of some aspects of the methods, the meta-search servers and/or the distributed database systems discussed herein. This summary is not an extensive overview of the methods, the meta-search servers and/or the distributed database systems discussed herein. It is not intended to identify key/critical elements or to delineate the scope of such methods, meta-search servers and/or distributed database systems. Its sole purpose is to present some concepts in a simplified form as a prelude to the more detailed description that is presented later.

The accompanying drawings illustrate various embodiments of the subject disclosure and, together with the general description given above, and the detailed description of the examples given below, serve to explain the examples of the subject disclosure. In the drawings, like reference numerals are used to indicate like parts in the various views.
Fig. 1 shows an exemplary distributed database system, in which a method of processing search queries may be performed.
Fig. 2 shows an exemplary method of processing search queries in the exemplary distributed database system of Fig. 1.
Fig. 3 shows a first phase of an illustrative example of the exemplary method for processing search queries as shown in Fig. 2.
Fig. 4 shows a second phase of the illustrative example of the exemplary method for processing search queries as shown in Fig. 2.
Fig. 5 shows an exemplary meta-search server for processing search queries in the exemplary distributed database system of Fig. 1.
Fig. 6 shows a specific example of a distributed database system implementing the exemplary method of Fig. 2 in accordance with New Distribution Capability (NDC) standards.
Fig. 7 shows a schematic representation of a computer system for use as the exemplary meta-search server shown in Fig. 5.

Before turning to the detailed description of examples, some more general aspects on involved techniques will be explained.

The subject disclosure generally pertains to processing search queries in a distributed database system. The term "search query" includes all types of database requests including e.g. read requests to retrieve data and write requests to insert, change or delete data. Also, the subject disclosure pertains to search engine technology, particularly meta-search engine technology. Here, search engine technology concerns information retrieval as the activity of searching for and obtaining information stored in a computer system. The meta-search engine technology concerns using other (different) search engine's data to provide own results. For example, meta-search engines take input from a user and simultaneously send out queries to third party search engines for results, gather sufficient data, format and present the search results to the user.

According to the meta-search engine technology, the client is redirected to the search engines using a URL generated and used by the meta-search engine. The approaches for redirecting client may cause several drawbacks with respect to the URL. For example, the length of the URL may become extremely long because the URL needs to contain all information necessary for the search engine to perform the client's search query. This requires additional bandwidth and also processing power at the meta-search engine in generating the URL and at the search engine in processing the URL to perform the search. Also, information relating to the client's search criteria may be visible in the URL which may cause security issues as these information may be modified by way of so-called man-in-the-middle attacks. Finally, the search engine needs to again perform the search using search criteria for which a search has already been performed some time before. This may lead to inconsistencies and inconveniences because the search result resulting when again performing the search with the client's search criteria may be different from the search result provided to and selected by the client.

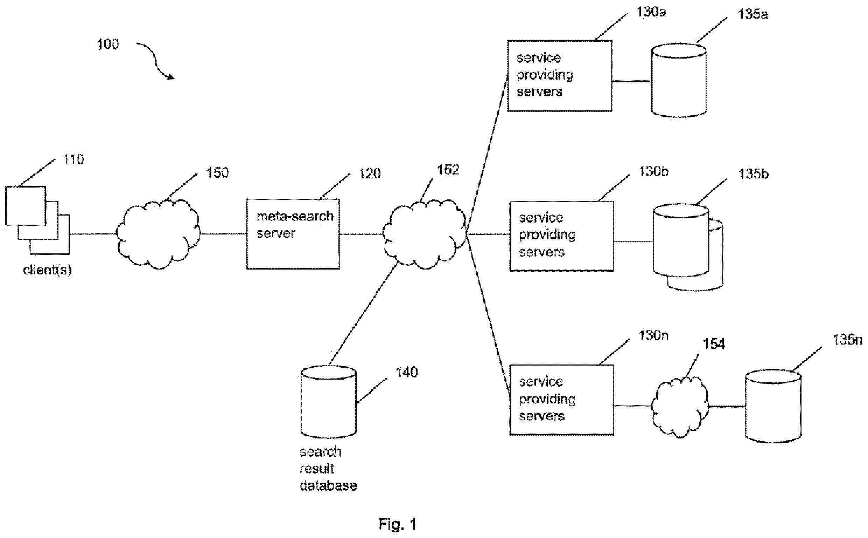

An exemplary distributed database system (100) for processing search queries is shown in Fig. 1.

The distributed database system (100) includes at least one meta-search server (120) and a plurality of service providing servers (130). Fig. 1 illustrates, as a non-limiting example for the plurality of service providing servers (130), three service providing servers (130a), (130b), (130n). The at least one meta-search server (120) is communicatively connected to each of the plurality of service providing servers (130) through one or more networks (152) such as Local Area Networks (LANs), Metropolitan Area Networks (MAN), or Wide Area Networks (WANs) including the Internet. In Fig. 1, as a non-limiting example, one network is illustrated through which the at least one meta-search server (120) and the plurality of service providing servers (130). More generally, each of the plurality of service providing server (130) may be connected through a separate network to the meta-search server (120). The at least one meta-search server (120) provides search engine functionality to clients, such as the at least one client (110), e.g., in the form of search queries. The at least one meta-search server (120) uses services of the plurality of service providing servers (130) for its own search engine functionality.

Each of the service providing servers (130) provides, as a service, search functionality to the distributed database system (100). The plurality of service providing servers (130) may be located at one site, or may be distributed over a plurality of sites. Each of the service providing servers (130) is coupled to at least one service database (135) and retrieves information stored in at least one service database (135). As illustrated in the non-limiting example of Fig. 1, the service database (135a) may be connected to the service providing server (130a) locally, or the service database (135n) may be connected to the service providing server (130n) through a network (154) such as LAN, MAN or WAN. Also, a plurality of service databases 135b may be connected to the service providing server (130b), locally or through a network. Herein, the term "database" here is meant to encompass any types of structured information storage system such as standard stand-alone databases like SQL or Non-SQL databases as well as complex, distributed and/or proprietary databases, relational databases or object-oriented databases.

The information or data stored in the at least one service database (135) may concern any type of information in a particular domain. For example, the data may be located in the domain of computer-based electronic circuit simulations and contain information on input values for the computer-based electronic circuit simulations, parameters of a model used by the computer-based electronic circuit simulations, intermediate and/or final simulation results, and the like. This computer-based electronic circuit simulation related data is kept in the at least one service database (135) and may be queried by the at least one client (110) on which the computer-based electronic circuit simulation is carried out, e.g., via the meta-search server (120) and the service providing servers (130), in order to retrieve input values or parameters, write or update the simulation results.

Further, a search result database (140) is provided in the distributed database system (100). The search result database (140) is connected to the meta-search server (120) and the plurality of service providing servers (130) through one or more networks such as LAN, MAN or WAN. In the non-limiting example of Fig. 1, the search result database (140) is connected through the same network (152) through which also the meta-search server (120) and the plurality of service providing servers (130) are connected to each other. The search result database (140) may also be connected through a first network to the meta-search server (120) and one or more second networks to the plurality of service providing servers (130), the first and second networks being different and also both being different from the networks through which the meta-search server (120) and the plurality of service providing servers (130) are connected to each other. The networks may be separated physically or logically. In the search result database (140), information with respect to previous search queries handled by the meta-search server (120), and the search results retrieved by the meta-search server (120) from the plurality of service providing servers (130) for the previous search queries are stored.

In Fig. 1, the at least one client (110) - usually a plurality of clients - is connected to the at least one meta-search server (120) through a network (150) such as LAN, MAN, WAN such as the Internet, or a mobile communication network such as Long Term Evolution (LTE). The connection may be wired or wireless. For example, the client (110) may be personal computers or mobile communication devices such as smartphones, tablets, personal assistance, or the like. The at least one client (110) may also be connected to the plurality of service providing servers (130) through the network (150) or other networks.

In the following, it will be explained in more detail how search queries are processed in the distributed database system (100) shown in Fig. 1. Also, it will be explained how the meta-search server (120) shown in Fig. 1 processes the search queries.

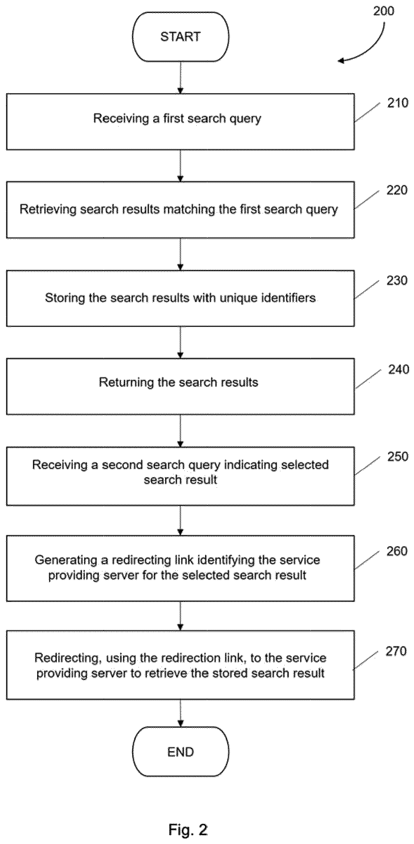

Fig. 2 illustrates a flow chart of a method (200) for processing search queries in the distributed database system (100) of Fig. 1.

In operation (210), the meta-search server (120) receives a first search query from a client 110. The first search query is to search for results in one or more of the plurality of service providing server (130). For example, the first search may be generated at the client (110) and transmitted via the network (150) to the meta-search server (120). In another example, the meta-search server (120) may provide a graphical user interface, such as a search website, presented to the client (110) for input of the first search query.

The first search query may include one or more search criteria or parameters. The search criteria may include a search string, search text or search phrase. The first search query may also include, as a search criterion or parameter, information with respect to the service providing servers (130) to be queried. That is, the client (110) issuing the first search query can define or select the one or more service providing server (130) among the plurality of service providing servers (130) against which the meta-search server (120) performs the first search query. Parameters of the first search query may include a time value specifying a time until which to receive search results.

For example, if the search query is for an Internet search, it might carry search terms such as a word or text phrase. In this case, a further search criterion or parameter may be the language of websites to be searched or an indication of a point of time of the first availability of search results (e.g., documents) including or being related to the search terms in the search query. In the domain of computer-based simulations, the search query may carry, as a search criterion, the name of an input parameter for which a value is needed by the computer-based simulation.

Then, in operation (220), search results matching the first search query are retrieved from the one or more of the plurality of service providing servers (130). For example, the meta-search server (120) queries the service providing servers (130) using the first search query and retrieves as the search results information provided by the service providing servers (130) in response to the first search query. In another example, the meta-search server (120) may issue the first search query via the network (152) to the service providing servers (130) which retrieve search results for the first search query. The search results match the first search query if they include, are related to, or are associated with, information which coincide with or are at least similar to a certain degree to search criteria included in the first search query. The certain degree (i.e., degree of similarity) may be predefined or set by a parameter included in the first search query.

In a more detailed further example, in response to receiving the first search query in operation (210), the meta-server (120) may process the first search query and transmit the first search query to one or more of the service providing servers (130). That is, the meta-search server (120) issues a search query including search criteria and/or parameters to the service providing servers (130). The search criteria and parameters included in such search query issued to the service providing servers (130) may correspond to search criteria and parameters, respectively, of the first search query or may be derived therefrom by the meta-search server (120). Also, the meta-search server (120) may issue the same search query or individual search queries to the one or more service providing servers (130) to which the first query is to be forwarded.

In response to receiving the search query from the meta-search server (120), the one or more service providing servers (130) may process the search query and perform a corresponding search, e.g., using the search criteria and/or parameters included in the search query, in the service database (135), any other database coupled to the service providing server (130), and/or other subordinate service providing servers coupled to the service providing server (130). In case of the presence of other subordinate service providing servers, the service providing server (130) itself may provide meta-search engine functionality and may also represent another meta-search server which receives first search queries from another superordinate meta-search server (120). Each service providing server (130) receives or retrieves search results from the service database (135) or any other database. Service providing servers (130) may also generate or calculate search results for the search query. The search results match the search query. That is, the search results include information, such as terms, phrases, strings, or the like, which coincide with or are at least similar to a certain degree to the search criteria included in the search query. The certain degree (i.e., degree of similarity) may again be predefined in the service providing server (130) or set as a parameter included in the search query by the meta-search server (120). The search results matching the search query are then transmitted to the meta-search server (120).

The meta-search server (120) waits for receipt of the search results from the service providing servers (130) to which search queries have been issued. In case the first search query includes the time value specifying the time until which to receive search results, the meta-search server (120) waits for search results until a timer has lapsed. The timer may be set equal to or shorter than the time value and may also take into consideration time needed by the meta-search server (120) to further process the search results and transmit the search results to the client (110).

In operation (230), after retrieving the search results from the one or more service providing servers (130), the search results are stored in the search result database (140) for later use by e.g. the service providing servers (130) after selection of a search result by the client (110). The search results are stored in the search result database (140) together with corresponding unique identifiers associated to the search results.

The unique identifier may, for example, correspond to a number which is incremented after having successfully associated it with a search result. The unique identifiers may also correspond to hash values of the search results generated by applying hash algorithms such as MD5, SHA-1, or the like. Using hash values as the unique identifiers may require supplementing the hash values with a number to avoid duplicates. A time of retrieval of the search results may also be used as the unique identifier or a part of the unique identifier.

In one particular example, the unique identifier comprises a first portion and a second portion. The first portion indicates the service providing server (130) from which the respective search result was received. Examples for the first portion include the Internet Protocol (IP) address, Media Access Control (MAC) address, domain name, an identifier assigned to the service providing server (130), or any other suitable information identifying the service providing server (130) uniquely. The second portion identifies the respective search result in the search result database (140). Examples for the second portion include hash values, numbers, or any other suitable information identifying the search result uniquely.

The search result database (140) may store the search results associated with the corresponding unique identifiers together with information used to determine expiry of stored search results. For example, the information may include a time information identifying the time at which the search result has been stored in the search result database (140), a time of expiry of the search result, or any other suitable information based on which expiry of the search results can be determined. The search result database (140), or any other component of the distributed database system (100) such as the meta-search server (120), may determine based on the stored information whether search results stored in the search result database (140) have expired. The determination may be performed continuously, in a periodic manner, or at times of low activity or idleness. If determination indicates expiry of a search result, the search result may be deleted from the search result database (140).

The meta-search server (120) returns the search results to the client (110), in operation (240). The operation (240) may be performed in parallel with, or subsequently to, the operation (230). For example, the meta-search server (120) may process the search results retrieved or received from the service providing servers (130) to generate the - final - search results to be provided to the client (110). Processing the final search results may also include filtering or sorting the search results according to filter or sort criteria predefined or set by the client (110) in the first search query. Alternatively or additionally, processing the search results including filtering and sorting may also be performed at the service providing servers (130). The final search results are then transmitted to the client (110) for presentation or further processing. If the meta-search server (120) provides a graphical user interface (i.e., a search website), the search results may be returned to the client (110) by providing the search results via the graphical user interface, such as via a search result website.

Subsequently, a second search query indicating at least one of the search results returned to the client (110) may be received from the client (110), in operation (250). The at least one search result may be selected from among the search results by the client (110). The second search query may also be represented by a selection signal indicating the at least one search result selected by the client (110). In response to receiving the second search query in operation (250), the meta-search server (120) generates a redirection link, in operation (260), in order to facilitate further processing of the at least one selected search result with the service providing server (130) which provided the at least one search result. The generated redirection link identifies the service providing server (130) from which the at least one search result was retrieved. Also, the generated redirection link includes the unique identifier corresponding to, or associated with, the at least one search result. That is, the generated redirection link comprises information indicating the service providing server (130) and information enabling the at least one search result to be retrieved from, or accessed in, the search result database (140).

For example, the meta-search server (120) receiving the second search query may first determine whether the second search query indicates at least one search result and whether the at least one search result is one of the search results returned to the client (110). The meta-search server (120) may then identify the service providing server (130) from which the at least one search result was retrieved. In order to do so, the meta-search server (120) may determine the service providing server (130) from the unique identifier if the unique identifier is included in the second search query, or may query the search result database (140) using the at least one search result as search criterion and retrieve information about the service providing server (130). In the above example with the unique identifier having the two portions, the first portion indicating the service providing server (130) may be used as the information about the service providing server (130). This may also allow the meta-search server (120) to retrieve the unique identifier assigned to the at least one search result from the search result database (140). In the above example with the unique identifier having the two portions, the second portion identifying the search result in the search result database (140) may be used as the information enabling the at least one search result to be retrieved from, or accessed in, the search result database (140). The information about the service providing server (130) and the unique identifier may then be used by the meta-search server (120) to generate the redirection link.

Finally, in operation (270), the meta-search server (120) redirects the client (110) to the service providing server (130) using the redirection link. The meta-search server (120) redirects the client (110) to the service providing server (130) identified in the redirection link. At the service providing server (130) to which the client (110) is redirected, the at least one search result stored in the search result database (140) is retrieved using the unique identifier included in the redirection link. The retrieved at least one search result is then used to further process the second search query at the service providing server (130). For example, in the HTTP protocol used by the World Wide Web, redirection is a technique in the form of a response to a request with a status code that causes a browser at the client which issued the request to issue a different request. The status code is used by the client to understand the redirection and in particular which method is to be used for issuing the subsequent request. Together with the status code, a new URL for the bowser to resubmit a GET or POST request is provided. According to the subject disclosure, the meta-search server (120) may signal redirection to the client (110) e.g. by providing a corresponding status code, and provide the redirection link (e.g., URL to the service providing server (130)) to the client (110). The client (110) receiving the redirection signaling may then use the redirection link and submit a GET request to request information of the selected search result from the service providing server (130) or a POST request to send data to the service providing server (130) to create/update information of the selected search result.

As a result, the second search query is not further processed by the meta-search server (120) but by the service providing server (130) from which, in response to the first search query, the at least one search result selected by the client (110) from among the search results and indicated in the second search query was retrieved. In other words, the second search query is directed to the service providing server (130) responsible for processing the second search query. So, the second search query can be directed to the responsible service providing server (130) while the client (110) does not need to be aware of the service providing server (130) to which the second search query is to be directed to. In addition, contrary to the technique for redirection as described above, including the unique identifier in the redirection link and using the unique identifier by the service providing server (130) to retrieve the at least one search result stored in the search result database (140), avoids the necessity to again process and perform the first search query against the service database (135). This reduces the overall computation resources to be employed in the distributed database system (100) because retrieving the search result from the search result database (140) is more efficient in terms of computation resources than re-performing the search for search results matching the second search query in the service database (135). In the search result database (140), the unique identifier can be used as a key for the stored search results, while the service database expects the search criteria of the first search query as search query key. Also, including the unique identifier instead of the at least one search result selected at the client (110) or the first search query (i.e., the search criteria and the parameters included in the first search query) reduces the length of the redirection link significantly and therefore reduces both, network load and processing as well as memory resources at the client (110) to process the redirection link.

In particular the reduction of the length of the redirection link will be exemplified. For example, a redirection (deep) link for a selected search result according to the above-described approaches comprises all information necessary for the service providing server (130) to perform a search for the selected search result. In an example concerning computer-based electronic circuit simulations, the redirection link may comprise information such as the URL of the service providing server (130) which here is simulation provider A (e.g., www.simulation-provider-A.fr), information that the URL contains a deep link (e.g., deeplink), information indicating the encoding of the deep link (e.g., ENC), service provider identification number information (e.g., "16"), language information (e.g., french language "fr"), country information (e.g., Canada "ca"), and the (original) search query information (e.g., simulation of "circuit A", input parameter "voltage", parameter set no. "4"). The redirection link may therefore have the following form: https://www.simulation-provider-A.fr/deeplink/searchquery?ENC=C75A95E0A8D2E27CE7C3709D2D1EA932FE68507B 83C28FDAD78E735A7DB2BCF78F4AEB5CF0EAA5C5E612367AE4C89F11D4935B8 410ABC1DD037E0F07510BF3EE1180E06B4C6CAA13DE6D784F71FEDA054EA4C1 0C67CAB1C26493749533EF1CE097D043D21FC9CBEB78DC269D41DCCDFFD9C27 F260C5B195D9FF97D1B01FFFB1092703126CC3F3294354EDBBDEFA1985455C1F7 61B400B586993 83E3BB60DA19299995271F676F4BA40395B57D2063BF6DBA64481 170D18D2B28866E876E0BC467A8D0AFBEA54139A8816E7F67B75E336EA34076A5 3A4CB98425D034F10F86FDD2A2398C2AB12907988A05B0DE2959112444FA00FC9 E7CF0788C0D3EDFCA7D99702C8F3AB3038CDB6CB6A1CB2889C13217E64EDA5 B91D20B397905E4A3B8A2A349386B43ABFA127C12813EFF39E6A7405D7B170B6 C7B3E0738BF5CCFA1F5E2A71A70FD94AB3EF43C8684B0F577D4F1130&serviceId =16&Language=fr&Country=ca&search-simulation=circuit-A&search _input=voltage&search_parameter=4. The redirection link generated according to the subject disclosure, after having the selected search result, may have the form: https://www.simulation-provider-A.fr/deeplink/searchqueryID?=15673, wherein the unique identifier of the selected search result is "15673". This unique identifier is used by the simulation provider A which determines the redirection link on the basis of the "deeplink" information to retrieve the search result from the search result database (140). That is, the simulation provider A does not again perform a search for search query (i.e., french language "fr", country "ca", simulation of "circuit A", input parameter "voltage", and parameter set no. "4") other than the simulation provider A according to the described approaches.

Hereinbelow, examples of the method for processing search queries as shown in Fig. 2 will be described.

As described, in operation (230), the search results retrieved from the plurality of service providing servers (130) and associated with corresponding unique identifiers are stored in the search result database (140).

In one example, the unique identifiers are assigned to the search results at each of the plurality of service providing servers (130) and then transmitted to the meta-search server (120). In other words, in operation (220), the meta-search server (120) retrieves the search results matching the first search query and also their respectively associated unique identifiers from the plurality of service providing servers (130). In this example, the meta-search server (120) may be responsible for performing operation (230) and storing the search results associated with their corresponding unique identifiers in the search result database (140). This may be performed prior to or concurrently with operation (240) to return the search results to the client (110). Otherwise, in this example, each of the plurality of service providing servers (130) may be responsible for storing the search results in the search result database (140) in operation (230). The service providing servers (130) may perform operation (230) concurrently with operation (220). For example, the service providing servers (130) may retrieve the search results, assign unique identifiers, store the search results associated with the unique identifiers in the search result database (140), and transmit the search results associated with the unique identifiers to the meta-search server (120), search result-wise or each task as a batch process. Other combinations such as distributed or load-dependent responsibility among the meta-search server (120) and the plurality of service providing servers (130) for storing the search results and the unique identifiers in the search result database (140) may also be envisaged.

In another example, the meta-search server (120) may assign each of the retrieved search results with the unique identifier and then, in operation (230), store the search result associated with the unique identifiers in the search result database (140). The meta-search server (120) may perform retrieving, assigning and storing operations, search result-wise or each operation as a batch process. More specifically, in case the meta-search server (120) performs the operations search result-wise, the meta-search server (120) retrieves, from the plurality of service providing servers (130), a first search result matching the first search query, assigns a unique identifier to the first search result and then stores the first search result in the search result database (140). The meta-search server (120) proceeds in the same manner for a second search result and subsequent search results. On the other hand, in case the meta-search server (120) performs operations as batch processes, the meta-search server (120) first retrieves, from the service providing servers (130), all the search results matching the first search query. When retrieving the search results is completed, the meta-search server (120) then assigns the unique identifiers to the search results. Again, after assigning is completed, i.e., all the search results are associated with corresponding unique identifiers, the meta-search server (120) stores the search results in the search result database (140).

In operation (240) shown in Fig. 2, the meta-search server (120) returns the search results to the client (110). In one example, returning the search results may also include returning the unique identifiers to the client (110). That is, the meta-search server (120) may, in a unitary operation, return the search results associated with their corresponding unique identifiers to the client (110). This may enable the client (110), after selecting at least one of the search results from among the search results returned by the meta-search server (120), to indicate the at least one selected search results in the second search query by including the unique identifier of the at least one selected search results in the second search query. If so, the meta-search server (120) receiving the second search query, can directly generate the redirection link without the need to determine the unique identifier first. Especially in case the unique identifier comprises the two portions as described above, the meta-search server (120) is not required to determine the service providing server (130) from which the at least one selected search result was received, because the unique identifier already comprises the first portion indicating said service providing server (130).

In examples of the method of Fig. 2, the redirection link may be a deep link. That is, the meta-search server (120) generates, as the redirection link, a hyperlink to the at least one selected search result at the service providing server (130) from which the at least one selected search result was retrieved, i.e., the service providing server (130) responsible for said search result. For example, the hyperlink may point to the IP address or Uniform Resource Locator (URL), such as the web address, of the service providing server (130) and also contain information to point to the at least one selected search result, such as the second portion of the two-portion unique identifier. In general, the redirection or deep link comprises information in order to enable the service providing server (130) to retrieve the at least one stored search result corresponding to the at least one selected search results (i.e., the at least one search result indicated in the second search query from the client (110)) from the search result database (140). The service providing server (130) to which the redirection or deep link points to uses information (e.g., the unique identifier, particularly the second portion of the two-portion unique identifier) to retrieve the at least one search results from the search result database (140) for further processing at the service providing server (130) and/or presenting to the client (110).

In one particular example, the unique identifier may be encrypted using an encryption scheme and the redirection link (i.e., the deep link) is generated in operation (260) so as to include the encrypted unique identifier. This prevents the information in the redirection link to be visible and/or easily modifiable by man-in-the-middle attacks. Examples for the encryption scheme include Message Authentication Code (MAC), particularly the key-Hash or Hash-based Message Authentication code (HMAC), Authenticated Encryption (AE), particularly Authenticated Encryption with Associated Data (AEAD), or any other suitable encryption algorithm.

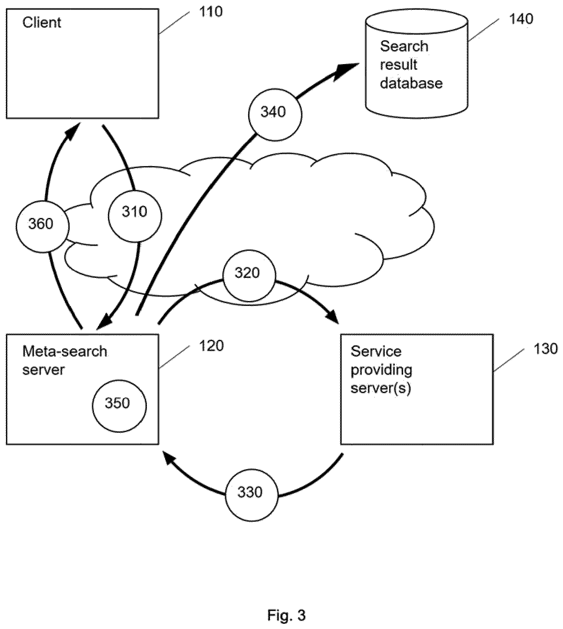

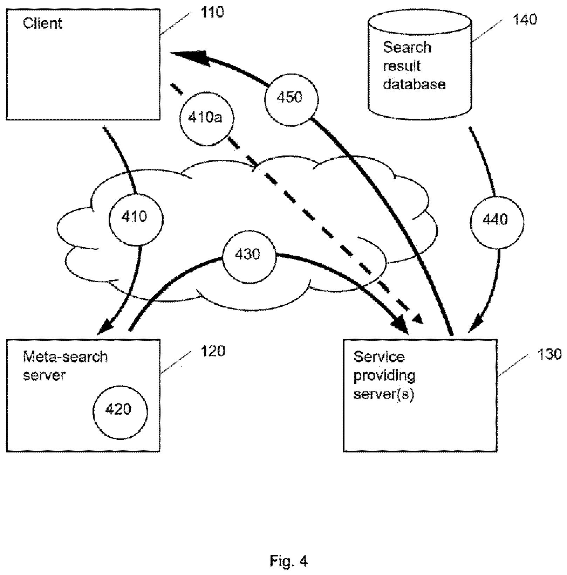

Referring now to Figs. 3 and 4, an illustrative example of the exemplary method (200) for redirecting search queries as described above with reference to Fig. 2 will now be described. In particular, Figs. 3 and 4 illustrate the flow of messages, queries, requests and responses according to the method (200) within the distributed database system (100).

In principle, the flow of the method (200) as described above can be partitioned into two phases, a first phase concerning processing related to the first search query and a second phase concerning processing related to the second search query. Fig. 3 illustrates the flow belonging to the first phase, and Fig. 4 to the second phase.

The first phase shown in Fig. 3 starts with the client (110) transmitting a first search query to the meta-search server (120), in operation (310). In response to receiving the first search query, and after processing the same, the meta-search server (120) queries one or more of the plurality of service providing servers (130) for search results matching the first search query. For example, the meta-search server (120) may transmit a search query to one or more of the plurality of service providing servers (130), in operation (320), the search query corresponding to the first search query or derived therefrom. In response to receiving and processing the search query, the plurality of service providing servers (130) retrieves search results matching the search query from the service database(s) (135). Each of the plurality of service providing servers (130) transmits the search results to the meta-search server (120). Thereby, the meta-search server (120) retrieves, from the plurality of service providing servers (130), search results matching the first search query. The retrieved search results are associated with unique identifiers. For example, the meta-search server may assign the unique identifier to the retrieved search results, or receive the search results together with their associated unique identifiers, assigned by the service providing servers (130). In operation (340), the meta-search server (120) stores the retrieved search results associated with their corresponding unique identifiers in the search result database (140) and in operation (360), returns at least the search results to the client (110). Prior to storing or returning the search results, the meta-search server (120) may process the search results (e.g., by applying filters or sorting criteria). As a result, the client (110) receives, as a response to the first search query, search results from the meta-search server (120) which matches the first search query. Also, for use in the second phase, the search results retrieved in response to the first search query are uniquely identified by assigning unique identifiers and storing the search results (i.e., the search results associated with the corresponding unique identifiers) in the search result database (140).

In the second phase shown in Fig. 4, the client (110) which received the search results in response to the first search query selects at least one of the search results and transmits a second search query indicating the selected search result to the meta-search server (120) in operation (410). For example, the indication of the selected search result may be accomplished by including the unique identifier associated with the selected search result in the second search query. In operation (420), the meta-search server (120) processes the second search query. This processing in operation (420) includes generating a redirecting link identifying the service providing server (130) from which the at least one selected search result was retrieved. The redirecting link generated by the meta-search server (120) includes the unique identifier corresponding to the selected search result. If not already received from the client (110), the processing in operation (420) may include determining the unique identifier of the selected search result, for example, by querying the search result database (140). Then, in operation (430), the meta-search server (120) redirects the client (110) to the service providing server (130) from which the selected search query was retrieved. That is, using the redirection link, the meta-search server (120) redirects the client (110) to the service providing server (130) identified in the redirection link. As illustrated by dotted line (410a), the result of redirecting the client (110} is as if the client (110) has issued the second search query indicating the selected search result to the service providing server (130) from which the selected search result was received. The service providing server (130} uses the information provided in the redirection link, e.g., the unique identifier, to retrieve, from the search result database, the at least one stored search result corresponding to the at least one selected search result in operation (440). Thus, the service providing server (130) does not perform another search using the service databases (135), but uses the search results resulted from the first search query and being stored in the search result database (140). The search result retrieved from the search result database (140) in operation (440), is then used, by the service providing server (130), to process the second search query. Finally, in operation (450), the result of the processing may be provided as a response to the second search query to the client (110).

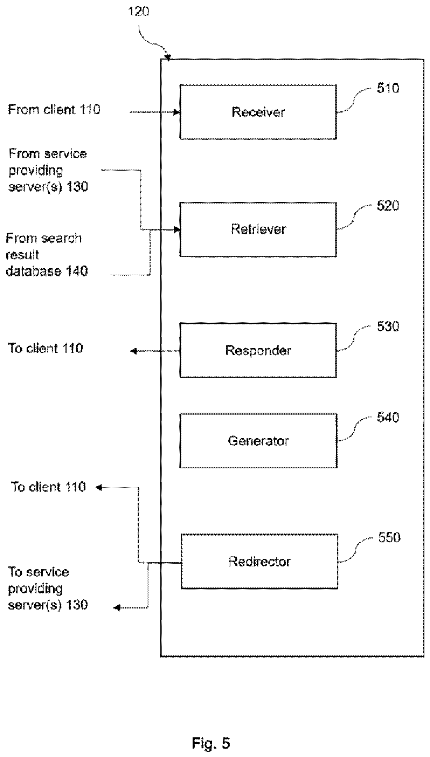

Referring to the illustration of Fig. 5, an exemplary meta-search server (120) for processing search queries in the exemplary distributed database system (100) of Fig. 1 will be described. As already described above, the meta-search server (120) forms part of the distributed database system (100) and is coupled to the client (110), the plurality of service providing servers (130), and the search result database (140).

In general, the meta-search server (120) is arranged to perform any operations of the exemplary method for processing search queries as described above with reference to Fig. 2. That is, the meta-search server (120) is arranged receive a first search query from the client (110), retrieve search results matching the first search query from the plurality of service providing servers (130), and return the search results to the client (110). Also, the meta-search server (120) is arranged to receive a second search query from the client (110) indicating at least one selected search result of the search results, generate a redirection link identifying the service providing server (130) from which the at least one selected search result was retrieved and including the unique identifier corresponding to the at least one selected search result, and redirect the client (110) to the service providing server (130) identified in the redirection link.

For example, the meta-search server (120) may comprise at least one memory and at least one processing element. In the at least one memory, executable instructions may be stored. The processing element may read the executable instruction from the at least one memory and execute the same which causes or arranges the meta-search server (120) to perform the described methodologies. The meta-search server (120) may also comprise one or more logic elements, carrying out the described methodologies. Particularly, the meta-search server (120) may comprise a receiver (510), communicatively coupled to the client (110), for receiving search queries from the client (110). The receiver (510) receives the first search query as well as the second search query indicating the at least one selected search result of the search results. A retriever (520), communicatively coupled to the plurality of service providing servers (130), retrieves search results from the service providing servers (130) when the receiver (510) signals receipt of the first search query. The retriever (520) may also be communicatively coupled to the search result database (140) and in response to the receiver (510) signaling receipt of the second search query, retrieve the unique identifier for the at least one selected search result from the search result database (140). The meta-search server (120) may further comprise a responder (530), communicatively coupled to the client (110), for receiving the search results retrieved by the retriever (520) and returning the search results to the client (110). A generator (540) for generating the redirection link and a redirector (550) for redirecting the client (110) using the generated redirection link to the service providing server (130) may be provided in the meta-search server (120).

An exemplary distributed database system employing the database technologies described herein may operate according to New Distribution Capability (NDC) standards by the International Air Transport Association (IATA). NDC standards are data transmission standards for airlines and involve using XML-based data transmission standards to enhance the capability of communications with the airlines. The usage of NDC standards can offer improved services, such as customization and personalization for the customers, for example, better than Global Distribution Systems (GDS) because of flexible programming. Using the NDC standards, the distributed database system can provide rich information and airline custom programs to the consumers. For example, airlines can offer a wide variety of products and services, including custom programs, similar to their websites to appeal to the consumers, including early boarding, preferred seating, airline lounge access, lie-flat seats, Wi-Fi on international services, three-for-two pricing from Air New Zealand, and extra leg room and/or extra recline seat selection. Using NDC standards, the distributed database system described herein can provide the same information to the consumers. An advantage of the distributed database system is the ability to connect to multiple airlines, e.g., the airlines that accept NDC standards, thus can aggregate flight information from multiple airlines with a single input from the customer, instead of requiring the customer to contact individual websites of the airlines.

The usage of NDC standards can also provide significant advantages over current GDS, which might not be aware of the full range of airline products on offer, and which cannot provide airline customized offers to the customers. For example, in a GDS, one business class seat looks like any other, e.g., just a code on a screen. The distributed database system can offer all services from multiple airlines, so a customer can choose the best travel package. For example, the distributed database system can allow airlines to present and manage their product offering through indirect sales channels, such as through travel agents, in the same way as selling through their own websites.

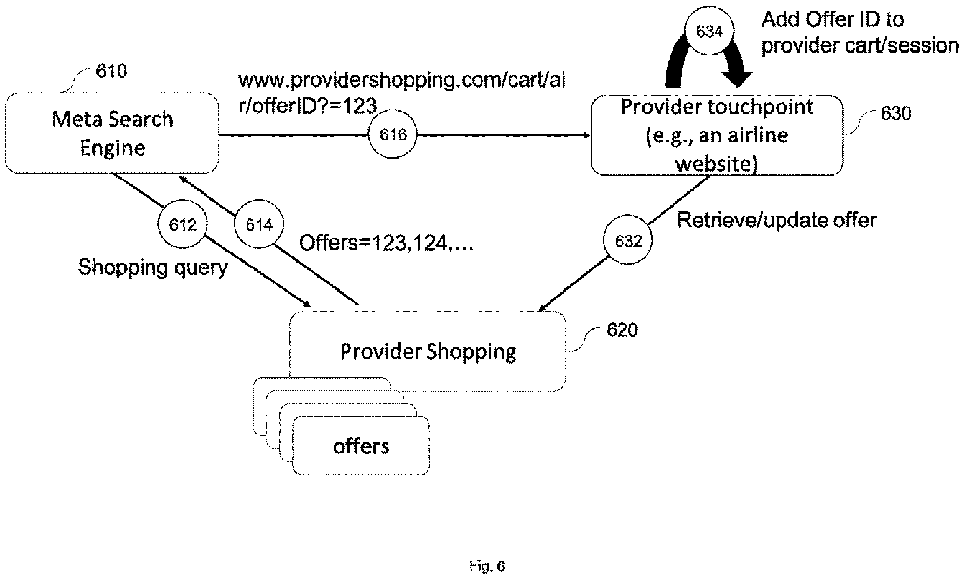

A specific example of the distributed database system implementing the exemplary method of Fig. 2 in accordance with NDC standards is shown in Fig. 6. In this example, the distributed database system operates, at least in part, in accordance with NDC standards. Here, at least the provider shopping subsystem (620), e.g., a service providing server (130) as described above, may operate according to NDC standards. In other examples, one or more of the other subsystems such as the meta-search subsystem (610), e.g., the meta-search server (120) as described above, the provider touchpoint subsystem (630), e.g., a service providing server (130) as described above, and an offer database subsystem (not shown), e.g., the search result database (140) as described above may operate according to NDC standards. According to the role model of NDC standards, the provider shopping subsystem (620) may assume the role of the aggregator and the provider touchpoint subsystem (630), e.g., an airline website, may assume the role of the "Offer Responsible Airline" (ORA). Fig. 6 is however not limited to the subsystems shown, and may also include a plurality of provider touchpoint subsystems. The meta-search subsystem (610), the provider shopping subsystem (620) and the provider touchpoint subsystem (630) are communicatively coupled via one or more communication networks. A client (not shown in Fig. 6) which may assume the role of the seller, e.g., a travel agency, is also communicatively coupled to the meta-search subsystem (610).

In operation, the meta-search subsystem (610) receives a first search query from the client (not shown). In response, the meta-search subsystem (610) retrieves offers (i.e., search results as described above) matching the first search query from the provider shopping subsystem (620). For example, the meta-search subsystem (610) may query the provider shopping subsystem (620) using a shopping request (612). The shopping request (612) may correspond to the first search query or may be derived from the first search query. Here, in accordance with NDC standards, the first search query and/or the shopping request (612) are NDC Shopping requests. In another example, the first search query and/or the shopping request (612) may be based on an Application Programming Interface (API).

The API may be provider-specific, particularly specific to facilitate communication with a provider. The API may provide at least one functionality to communicate with the provider. For example, the API may be to request offers from the provider. In a non-limiting example, the API may be developed by a provider providing travel-related content such as airline content and provided to search, shop, price, book, re-accommodate etc. the travel-related content to others such as service providers (e.g., airlines). Using the API, the travel-related content may be fed into a back-end system of e.g. a service provider to enable implementation of direct channels for shopping such as airline website, mobile applications, call centres, or the like. More specifically, the API may provide functionality to connect a front end to e.g. a system of a service provider (e.g., an airline system) hosted by the provider of the API in order to realize retailing.

At the provider shopping subsystem (620), the shopping request (612) is processed and the offers matching the shopping request (612) are determined. The offers are associated with corresponding unique identifiers such as 123, 124, ... as shown in Fig. 6 and stored in the offer database subsystem (not shown). The format of the offers may be based on the Extensible Markup Language (XML) and/or the NDC data transmission standard format. In the example of Fig. 6, the offer database subsystem may be communicatively coupled to the provider shopping subsystem (620). Also, in a non-limiting example, the provider shopping subsystem (620) may associate the offers with the unique identifiers. Then, the provider shopping subsystem (620) transmits the offers (614) as a response to the shopping request (612) to the meta-search subsystem (610) for return or presentation to the client. In the non-limiting example of Fig. 6, the offers are returned (614) together with the associated unique identifiers.

Then, at a later point in time, a second search query may be received from the client. The second search query indicates at least one of the offers returned to the client in response to the first search query. In an example, the second search query may be a request to get detailed information about a specific offer (e.g., a price breakdown) based on the NDC standard (e.g., NDC OfferPrice) or a request for placing an offer in a shopping cart based on an API (e.g., an API to add an offer to a shopping cart). For example, the API may be as described above, in particular provider-specific. In yet another example, the second search request may be a request for purchasing an offer, which may be based on the NDC standard (e.g., OrderCreate) or based on an API (e.g., an API to purchase an offer, an API to checkout a cart and order an offer in the cart). The at least one offer may be selected by the client. Here, in the example of Fig. 6, the client selects the offer with the unique identifier 123. In response to receiving the second search query, the meta-search subsystem (610) generates a redirection link identifying the provider touchpoint subsystem (630), i.e., a service providing server which provided the at least one selected offer, as the service providing server responsible for handling the at least one selected offer. The redirection link includes the unique identifier corresponding to the at least one selected offer. An example of the redirection link indicating the provider touchpoint subsystem (630) and the at least one selected offer 123 (e.g., indicated as the offerID in the redirection link) may have the form: www.providershopping.com/cart/air/offerID?=123. The meta-search subsystem (610) redirects (616) the client to the provider touchpoint subsystem (630) using the redirection link.

The provider touchpoint subsystem (630) may process the at least one offer indicated in the redirection link. For example, the provider touchpoint subsystem 630 may retrieve (632) the at least one offer stored in the offer database subsystem using the unique identifier included in the redirection link. The provider touchpoint subsystem (630) may also update the at least one offer stored in the offer database subsystem. The provider touchpoint subsystem (630) may also add the offerID 123 (i.e., the unique identifier of the at least one selected offer) to the provider cart or provider session to process the second search query (634).

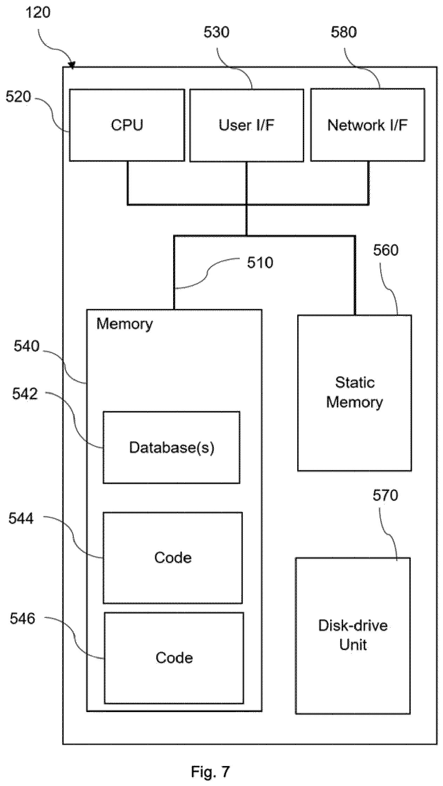

Finally, Fig. 7 is a diagrammatic representation of a computer system (700) which provides the functionality of the meta-search server (120) of Fig. 5. Within the computer system (700) a set of instructions, to cause the computer system (700) to perform any of the methodologies discussed herein, may be executed.

For example, the computer system (700) includes at least one processor (720), a main memory (740) and a network interface device (780), which communicate with each other via a bus (710). Optionally, it may further include a static memory (760) and a disk-drive unit (770). A video display, an alpha-numeric input device and a cursor control device may be provided as examples of a user interface (730). The network interface device (780) connects the computer system (700) at least to the clients (110), the service providing servers (130), and the search result database (140), the Internet and/or any other network. A set of computer-executable instructions (i.e., computer program code) (744) embodying any one, or all, of the methodologies described above, resides completely, or at least partially, in or on a machine-readable medium, e.g., the main memory (740) and/or the at least one processor (720). A machine-readable medium on which the code (744) resides may also be a non-volatile data carrier (e.g., a non-removable magnetic hard disk or an optical or magnetic removable disk) which is part of disk drive unit (770). The code (744) may further be transmitted or received as a propagated signal via the Internet through the network interface device (780). In the memory (740), one or more databases (742) may be stored and included. The search result database (140) may, if not provided external to the meta-search server (120), also be one of the in-memory databases (742). Basic operation of the computer system (700) including the user interface and network communication is controlled by an operating system (746).

In general, the routines executed to implement the embodiments of the invention, whether implemented as part of an operating system or a specific application, component, program, object, module or sequence of instructions, or even a subset thereof, may be referred to herein as "computer program code," or simply "program code." Program code typically comprises computer-readable instructions that are resident at various times in various memory and storage devices in a computer and that, when read and executed by one or more processors in a computer, cause that computer to perform the operations necessary to execute operations and/or elements embodying the various aspects of the embodiments of the invention. Computer-readable program instructions for carrying out operations of the embodiments of the invention may be, for example, assembly language or either source code or object code written in any combination of one or more programming languages.

Various program code described herein may be identified based upon the application within that it is implemented in specific embodiments of the invention. However, it should be appreciated that any particular program nomenclature that follows is used merely for convenience, and thus the invention should not be limited to use solely in any specific application identified and/or implied by such nomenclature. Furthermore, given the generally endless number of manners in which computer programs may be organized into routines, procedures, methods, modules, objects, and the like, as well as the various manners in which program functionality may be allocated among various software layers that are resident within a typical computer (e.g., operating systems, libraries, API's, applications, applets, etc.), it should be appreciated that the embodiments of the invention are not limited to the specific organization and allocation of program functionality described herein.

The program code embodied in any of the applications/modules described herein is capable of being individually or collectively distributed as a program product in a variety of different forms. In particular, the program code may be distributed using a computer-readable storage medium having computer-readable program instructions thereon for causing a processor to carry out aspects of the embodiments of the invention.

Computer-readable storage media, which is inherently non-transitory, may include volatile and non-volatile, and removable and non-removable tangible media implemented in any method or technology for storage of information, such as computer-readable instructions, data structures, program modules, or other data. Computer-readable storage media may further include random access memory (RAM), read-only memory (ROM), erasable programmable read-only memory (EPROM), electrically erasable programmable read-only memory (EEPROM), flash memory or other solid state memory technology, portable compact disc read-only memory (CD-ROM), or other optical storage, magnetic cassettes, magnetic tape, magnetic disk storage or other magnetic storage devices, or any other medium that can be used to store the desired information and which can be read by a computer. A computer-readable storage medium should not be construed as transitory signals per se (e.g., radio waves or other propagating electromagnetic waves, electromagnetic waves propagating through a transmission media such as a waveguide, or electrical signals transmitted through a wire). Computer-readable program instructions may be downloaded to a computer, another type of programmable data processing apparatus, or another device from a computer-readable storage medium or to an external computer or external storage device via a network.

Computer-readable program instructions stored in a computer-readable medium may be used to direct a computer, other types of programmable data processing apparatus, or other devices to function in a particular manner, such that the instructions stored in the computer-readable medium produce an article of manufacture including instructions that implement the functions, acts, and/or operations specified in the flow charts, sequence diagrams, and/or block diagrams. The computer program instructions may be provided to one or more processors of a general purpose computer, a special purpose computer, or other programmable data processing apparatus to produce a machine, such that the instructions, which execute via the one or more processors, cause a series of computations to be performed to implement the functions, acts, and/or operations specified in the flow charts, sequence diagrams, and/or block diagrams.

In certain alternative embodiments, the functions, acts, and/or operations specified in the flow charts, sequence diagrams, and/or block diagrams may be re-ordered, processed serially, and/or processed concurrently consistent with embodiments of the invention. Moreover, any of the flow charts, sequence diagrams, and/or block diagrams may include more or fewer blocks than those illustrated consistent with embodiments of the invention.

The terminology used herein is for the purpose of describing particular embodiments only and is not intended to be limiting of the embodiments of the invention. It will be further understood that the terms "comprises" and/or "comprising," when used in this specification, specify the presence of stated features, integers, steps, operations, elements, and/or components, but do not preclude the presence or addition of one or more other features, integers, steps, operations, elements, components, and/or groups thereof. Furthermore, to the extent that the terms "includes", "having", "has", "with", "comprised of', or variants thereof are used, such terms are intended to be inclusive in a manner similar to the term "comprising".

While all of the invention has been illustrated by a description of various examples and while these examples have been described in considerable detail, it is not the intention to restrict or in any way limit the scope to such detail. Additional advantages and modifications will readily appear to those skilled in the art. The invention in its broader aspects is therefore not limited to the specific details, representative apparatus and method, and illustrative examples shown and described. Accordingly, departures may be made from such details without departing from the scope of the general inventive concept.

## Claims

1. A method for processing search queries, comprising:
receiving, at a meta-search server, a first search query from a client;
retrieving, from a plurality of service providing servers, search results matching the first search query;
storing the search results associated with corresponding unique identifiers in a search result database;
returning, by the meta-search server, the search results to the client;
in response to receiving a second search query from the client indicating at least one selected search result of the search results, generating, by the meta-search server, a redirection link identifying the service providing server from which the at least one selected search result was retrieved and including the unique identifier corresponding to the at least one selected search result; and
redirecting, by the meta-search server using the redirection link, the client to the service providing server identified in the redirection link to retrieve, from the search result database, the at least one stored search result using the unique identifier included in the redirection link for processing the second search query.

2. The method of claim 1, further comprising, at each of the plurality of service providing servers, assigning the search results each with a unique identifier and transmitting the search results associated with the corresponding unique identifiers to the meta-search server, wherein storing the search results in the search result database is performed by each of the plurality of service providing servers, or by the meta-search server.

3. The method of claim 1, further comprising, at the meta-search server, assigning the retrieved search results each with a unique identifier, wherein the storing in the search result database is performed by the meta-search server.

4. The method of any one of claims 1 to 3, wherein the unique identifier comprises a first portion indicating the service providing server from which the respective search result was retrieved and a second portion identifying the respective search result in the search result database.

5. The method of any one of claims 1 to 4, wherein returning the search results to the client includes returning the unique identifiers associated with the search results, and wherein the second search query from the client includes the unique identifier associated with the at least one selected search result.

6. The method of any one of claims 1 to 5, wherein the redirection link is a deep link comprising the unique identifier of the at least one selected search result, for use by the respective service providing servers to retrieve the at least one stored search result corresponding to the at least one selected search result from the search result database.

7. The method of claim 6, wherein the redirecting further includes encrypting the unique identifier using an encryption scheme, and generating the deep link being the redirection link so as to include the encrypted unique identifier.

8. A meta-search server to process search queries, the meta-search server being part of a distributed database system also comprising a plurality of service providing servers each comprising a database, and a search result database, the meta-search server being arranged to:
receive a first search query from a client;
retrieve, from the plurality of service providing servers, search results matching the first search query, the search results retrieved from the plurality of service providing servers being stored associated with corresponding unique identifiers in the search result database;
return the search results to the client;
receive a second search query from the client indicating at least one selected search result of the search results;
upon receipt of the second search query, generate a redirection link identifying the service providing server from which the at least one selected search result was retrieved and including the unique identifier corresponding to the at least one selected search result; and
redirect, using the redirection link, the client to the service providing server identified in the redirection link to retrieve, from the search result database, the at least one stored search result using the unique identifier included in the redirection link for processing the second search query.

9. The meta-search server of claim 8, further being arranged to perform the method of any one of claims 2 to 7.

10. A computer program product comprising program code instructions stored on a computer readable medium to execute the method steps according to any one of the claims 1 to 7 when said program is executed on a computer.
